# EUROPÄISCHE PATENTSCHRIFT

(11) **EP 3 411 608 B1**
(45) Veröffentlichungstag und Bekanntmachung des Hinweises auf die Patenterteilung: **18.12.2019**
(21) Anmeldenummer: 17702380.1
(22) Anmeldetag: 01.02.2017
(51) Int. Cl.: F16F 13/26, F16F 13/10

(54) **HYDROLAGER MIT SCHALTBAR SCHWINGENDEM TILGERKANAL**
HYDRAULIC MOUNT WITH SWITCHABLE OSCILLATING ABSORBER CHANNEL
SUPPORT HYDRAULIQUE AVEC CANAL D'ABSORPTION OSCILLANT COMMUTABLE

(30) Priorität: 02.02.2016 DE 102016101829
(43) Veröffentlichungstag der Anmeldung: 12.12.2018
(73) Patentinhaber: Vibracoustic GmbH, 64293 Darmstadt (DE)
(72) Erfinder: SCHEMER, Thomas, 69469 Weinheim (DE); STÖCKER, Timo, 69502 Hemsbach (DE)
(74) Vertreter: Flügel Preissner Schober Seidel
(86) Internationale Anmeldenummer: PCT/EP2017/052108
(87) Internationale Veröffentlichungsnummer: WO 2017/134081

(56) Entgegenhaltungen:
- EP-A1- 1 614 930
- WO-A1-2007/065761
- DE-A1- 3 936 720
- DE-A1- 10 359 457

## Beschreibung

Die vorliegende Erfindung betrifft ein Hydrolager, insbesondere zur Lagerung eines Kraftfahrzeugmotors an einer Fahrzeugkarosserie, mit einer Tragfeder, die einen Lagerkern abstützt und eine Arbeitskammer umschließt, einer Ausgleichskammer, die von der Arbeitskammer durch eine Zwischenplatte getrennt und von einer Ausgleichsmembran begrenzt ist, wobei die Ausgleichskammer und die Arbeitskammer mit einer Flüssigkeit gefüllt und über einen in der Zwischenplatte angeordneten Dämpfungskanal flüssigkeitsleitend miteinander verbunden sind, wobei die Zwischenplatte eine Entkopplungsmembran aufweist, die eine Tilgerkammer von einer Luftkammer trennt, wobei die Luftkammer eine Belüftungsbohrung aufweist, wobei die Zwischenplatte eine Tilgerscheibe mit einem Tilgerkanal aufweist, und wobei der Tilgerkanal die Tilgerkammer mit der Arbeitskammer verbindet.

Derartige hydraulisch dämpfende Lager werden insbesondere zur Abstützung eines Kraftfahrzeugmotors an einer Fahrzeugkarosserie verwendet, um einerseits die von Fahrbahnunebenheiten hervorgerufenen Schwingungen zu dämpfen und andererseits akustische Schwingungen zu isolieren. Die von Fahrbahnunebenheiten hervorgerufenen Schwingungen werden durch ein hydraulisches System gedämpft, wobei das hydraulische System durch die flüssigkeitsgedämpfte Arbeitskammer, die Ausgleichskammer und den die beiden Kammern miteinander verbindenden Dämpfungskanal gebildet wird. Die Funktionsweise des hydraulischen Systems kann wie folgt beschrieben werden: Die Arbeitskammer wird durch eine Bewegung der Tragfeder vergrößert oder verkleinert, wobei die in der Arbeitskammer befindliche Flüssigkeit über den Dämpfungskanal in die Ausgleichskammer gedrückt wird. Die im Dämpfungskanal schwingende Flüssigkeit bewirkt eine Dämpfung.

Schaltbare Lager weisen zusätzlich eine Schaltvorrichtung auf, mit der das Lager an einen Fahrbetrieb oder einen Leerlaufbetrieb des Motors angepasst werden kann und so im Leerlauf eine Tilgerfunktion aufweist.

Ein derartiges schaltbares Hydrolager ist beispielsweise aus der DE 41 41 332 C2 bekannt. Das dort offenbarte schaltbare Hydrolager weist eine Steuerdruckdose auf, die je nach Ausführungsform mit einem Unterdruck oder einem Überdruck beaufschlagbar ist. Die Beaufschlagung kann beispielsweise durch einen Unterdruckspeicher oder durch einen Pneumatikanschluss erfolgen.

WO 2007/065761 A1 offenbart ein Hydrolager, bei dem Hydraulikkammern durch eine Trennplatte voneinander getrennt sind. Die Trennplatte weist mittig einen Bypass auf, der von einer sich axial erstreckenden Wandung der Trennplatte begrenzt wird. Der Bypass mündet in eine Ausgleichskammer. Die Ausgleichskammer ist über einen Abschnitt einer Entkopplungsmembran von einer Vakuumkammer, die mit der Umgebungsluft verbunden ist, getrennt.

In EP 1 614 930 A1 ist ein Hydrolager offenbart, welches eine Arbeitskammer aufweist, die von einer Ausgleichskammer getrennt ist. Mittig von einer Trennplatte erstreckt sich ein rohrförmiger Abschnitt, der die Arbeitskammer mit einer Zusatzkammer verbindet. Die Zusatzkammer ist durch eine Membran von einer Luftkammer getrennt. Die Luftkammer ist mit der Umgebung verbunden.

Es ist Aufgabe der vorliegenden Erfindung, ein Hydrolager der eingangs genannten Art vorzuschlagen, das eine variable Schwingungstilgung aufweist.

Diese Aufgabe wird durch ein Hydrolager nach Anspruch 1 gelöst. Vorteilhafte Ausgestaltungen des Hydrolagers sind Gegenstand der Unteransprüche.

Bei dem erfindungsgemäßen Hydrolager ist die Tilgerscheibe aus einem elastischen Werkstoff hergestellt, um im Betrieb zu schwingen. Die Tilgerscheibe und die Entkopplungsmembran schwingen im Betrieb. Das Betätigen einer Schalteinheit bewirkt ein Öffnen beziehungsweise Schließen der Luftkammer durch die Belüftungsbohrung. Im geschlossenen Zustand schwingt die Entkopplungsmembran gegen eine Luftmasse. Im geöffneten Zustand kann die Luft aus der Luftkammer entweichen. Dadurch weist die Entkopplungsmembran im geschlossenen Zustand eine höhere Steifigkeit auf als im geöffneten Zustand. Die Steifigkeit der Membran ist somit durch das Schalten der Belüftungsbohrung beeinflussbar. Die Steifigkeit der Tilgerscheibe hingegen ist im Wesentlichen materialabhängig und wird hauptsächlich durch Härte und Materialdicke des Werkstoffes beeinflusst.

Im Fahrbetrieb des Fahrzeugs ist die Belüftungsbohrung der Luftkammer üblicherweise verschlossen. Die Steifigkeit der Entkopplungsmembran ist dann derart eingestellt, dass die Entkopplungsmembran gleichphasig mit der Tilgerscheibe schwingt. Die Tilgerscheibe wirkt dann wie eine Membran und beeinflusst die dynamische Steifigkeit des Hydrolagers.

Im Leerlaufbetrieb des Motors ist die Belüftungsbohrung der Luftkammer geöffnet, sodass die Tilgerscheibe und die Entkopplungsmembran ungleichphasig schwingen. Die Entkopplungsmembran schwingt in diesem Fall mehr als die Tilgerscheibe, da die Luft aus der Luftkammer entweichen kann. Das Fluid strömt dann aus der Arbeitskammer durch den Tilgerkanal und verursacht eine Volumenänderung im Tilgerraum, wodurch die dynamische Steifigkeit des Lagers abnimmt. Die Absenkung der dynamischen Steifigkeit ist abhängig von Durchmesser und Länge des Tilgerkanals. Im Leerlaufbetrieb, das heißt wenn die Belüftungsbohrung der Luftkammer geöffnet ist, entfaltet das erfindungsgemäße Lager somit eine zusätzliche Tilgungswirkung.

Vorteilhaft kann die Tilgerscheibe eine axial abragende Wandung aufweisen, die den Tilgerkanal bildet. Dadurch können Durchmesser und Länge des Tilgerkanals einfach eingestellt werden.

Bei einer vorteilhaften Ausgestaltung ist ein Verstärkungselement, insbesondere ein Armierungsring, in die Wandung der Tilgerscheibe einvulkanisiert. Ein derartiges Verstärkungselement schützt die Wandung des Tilgerkanals vor Deformation. Bei einer weiteren vorteilhaften Ausgestaltung ist die Tilgerscheibe aus einem thermoplastischen Elastomer hergestellt.

Bei
einer vorteilhaften Ausführungsform weist die Zwischenplatte eine obere Düsenplatte auf, die mit der Tilgerscheibe einstückig ausgebildet ist.

Bei einer weiteren vorteilhaften Ausgestaltung weist die Tilgerscheibe ein Stützelement auf. Ein derartiges Stützelement kann sich vorteilhaft auf die Steifigkeit der Tilgerscheibe auswirken.

Vorteilhaft ist das Stützelement einteilig mit dem Verstärkungselement ausgebildet. Dies verbessert weiter die Steifigkeit der Tilgerscheibe in Kombination mit der Wandung.

Vorteilhaft umgibt das Material der Tilgerscheibe das Stützelement. Durch diese Maßnahme wird eine elastische Trennung der Arbeitskammer von der Tilgerkammer erzielt.

Bei einer vorteilhaften Ausgestaltung ist das Stützelement einteilig mit der oberen Düsenplatte ausgebildet. Dies stellt eine weitere Maßnahme zum Erhöhen der Steifigkeit der Tilgerscheibe dar.

Vorteilhaft weist das Stützelement mindestens eine Aussparung auf.

Bei einer vorteilhaften Ausgestaltung ist die mindestens eine Aussparung von dem Material der Tilgerscheibe ausgefüllt. Dies erzielt eine elastische Trennung von Tilgerkammer und Arbeitskammer und wirkt sich ebenfalls positiv auf die Steifigkeit der Tilgerscheibe aus.

Bei einer vorteilhaften Ausgestaltung ist die obere Düsenplatte aus einem thermoplastischen Elastomer hergestellt.

Es ist weiter bevorzugt, dass die Zwischenplatte eine obere Düsenplatte aufweist und die Tilgerscheibe mit der oberen Düsenplatte einstückig ausgebildet ist.

Vorteilhaft ist die Belüftungsbohrung durch eine Schalteinheit, insbesondere einen elektrischen Aktor, schaltbar. Unterdruckbehälter oder Pneumatikanschlüsse, wie sie im Stand der Technik vorgesehen sind, sind heutzutage häufig nicht mehr zum Schalten der Lager vorhanden. Zudem nimmt ein derartiger elektrischer Aktor weniger Bauraum in Anspruch.

Nachfolgend wird die Erfindung anhand von Ausführungsbeispielen näher beschrieben, die in den Zeichnungen schematisch dargestellt sind. Hierbei zeigt:
- Fig. 1: einen Vertikalschnitt durch eine erste Ausführungsform eines erfindungsgemäßen Hydrolagers;
- Fig. 2: eine vergrößerte Ansicht des Hydrolagers aus Fig. 1, wobei die Belüftungsbohrung der Luftkammer geschlossen ist;
- Fig. 3: die Ansicht aus Fig. 2, wobei die Belüftungsbohrung der Luftkammer geöffnet ist;
- Fig. 4: eine vergrößerte Schnittansicht eines zweiten Ausführungsbeispiels eines erfindungsgemäßen Lagers;
- Fig. 5: eine Schnittansicht durch eine dritte Ausführungsform eines erfindungsgemäßen Hydrolagers;
- Fig. 6: eine Schnittansicht durch eine vierte Ausführungsform eines erfindungsgemäßen Hydrolagers; und
- Fig. 7: eine Schnittansicht durch eine fünfte Ausführungsform eines erfindungsgemäßen Hydrolagers.

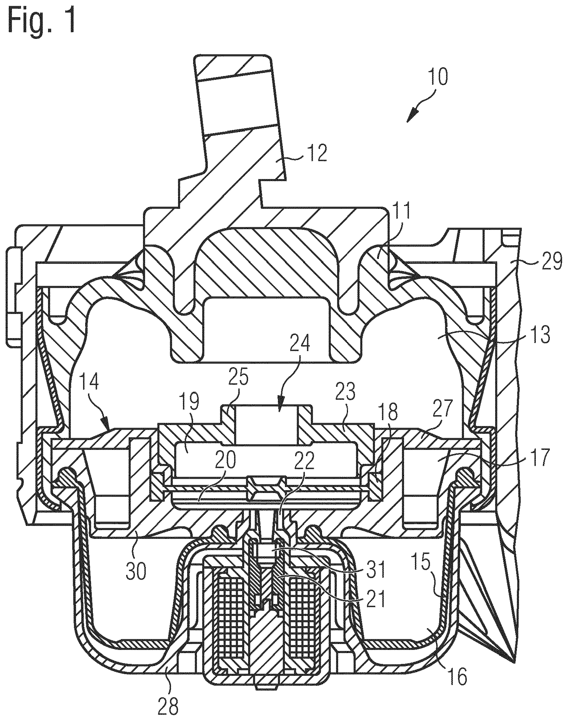

Fig. 1 zeigt ein Hydrolager 10 zur Lagerung eines nicht dargestellten Kraftfahrzeugmotors an einer nicht dargestellten Fahrzeugkarosserie. Das Hydrolager 10 weist eine Tragfeder 11 aus einem elastomeren Werkstoff zur Abstützung eines einvulkanisierten Lagerkerns 12 auf. An dem Lagerkern 12 ist der Motor befestigt.

Die Tragfeder 11 begrenzt eine Arbeitskammer 13, die mittels einer Zwischenplatte 14 von einer Ausgleichskammer 16 getrennt ist. Die Ausgleichskammer 16 wird von einer Ausgleichsmembran 15 begrenzt, die auch als Rollbalg bezeichnet wird. Die Kammern 13 und 16 sind mit einer hydraulischen Flüssigkeit befüllt und übereinen in der Zwischenplatte 14 angeordneten Dämpfungskanal 17 flüssigkeitsleitend miteinander verbunden.

Die Zwischenplatte 14 weist eine obere Düsenplatte 27 und eine untere Düsenplatte 30 auf. Die obere Düsenplatte 27 und die untere Düsenplatte 30 sind aus Kunststoff hergestellt. Zwischen der oberen Düsenplatte 27 und der unteren Düsenplatte 30 ist eine Entkopplungsmembran 18 aufgenommen. An der oberen Düsenplatte 27 ist eine Tilgerscheibe 23 befestigt, beispielsweise verklebt.

Die Tilgerscheibe 23 weist konzentrisch eine axial abragende Wandung 25 auf, die einen Tilgerkanal 24 bildet. Der Tilgerkanal 24 verbindet die Arbeitskammer 13 mit einer Tilgerkammer 19. Durch die Ausgestaltung der Tilgerscheibe 23 und insbesondere der hiervon axial abragenden Wandung 25 können Durchmesser und Länge des Tilgerkanals 24 bestimmt werden.

Die Tilgerkammer 19 ist durch eine Entkopplungsmembran 18 von einer Luftkammer 20 getrennt. Die Luftkammer 20 ist zu einer Seite durch die Entkopplungsmembran 18 und zu der anderen Seite durch die untere Düsenplatte 30 begrenzt.

Die Luftkammer 20 kann über eine Belüftungsbohrung 22 geöffnet oder geschlossen werden. Die Belüftungsbohrung 22 ist im vorliegenden Beispiel geschlossen dargestellt. Das Öffnen und Schließen der Belüftungsbohrung 22 erfolgt über eine Schalteinheit 21, insbesondere über einen elektrischen Aktor.

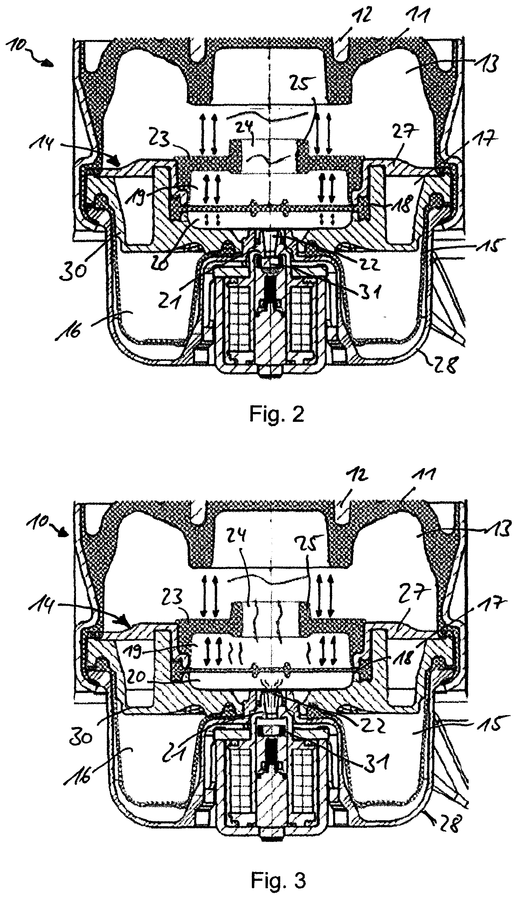

In Fig. 2 ist das Hydrolager aus Fig. 1 vergrößert dargestellt, wobei die Bewegung des Fluids in Arbeitskammer 13, Tilgerkammer 19 und Luftkammer 20 durch Pfeile und Wellenlinien dargestellt ist. In Fig. 2 ist die Belüftungsbohrung 22 verschlossen. Dabei wird ein Dichtelement 31 von unten durch die Schalteinheit 21 gegen die Belüftungsbohrung 22 gedrückt. Die in der Luftkammer 20 befindliche Luft kann somit bei Schwingungen der Entkopplungsmembran 18 nicht aus der Luftkammer 20 entweichen. Somit wird ein Druckwiderstand in der Luftkammer 20 gebildet, was zu einer höheren Steifigkeit der Entkopplungsmembran 18 im Vergleich zum geöffneten Zustand der Luftkammer 20 führt. In diesem Zustand schwingen Entkopplungsmembran 18 und Tilgerscheibe 23 etwa gleichphasig. In der Tilgerkammer 19 findet keine Volumenänderung statt. Diese Schaltstellung wird im Fahrbetrieb eingenommen.

In Fig. 3 ist das schaltbare Hydrolager aus Fig. 2 dargestellt, wobei jedoch die Belüftungsbohrung 22 geöffnet ist, da das Dichtelement 31 nicht mehr von unten gegen die Belüftungsbohrung 22 gedrückt wird. Die in der Luftkammer 20 befindliche Luft kann nun durch die Belüftungsbohrung 22 entweichen, wodurch die Steifigkeit der Entkopplungsmembran 18 vermindert wird. Die Entkopplungsmembran 18 schwingt in diesem Zustand mehr als die Tilgerscheibe 23. Das Fluid aus der Arbeitskammer 13 kann dann aufgrund der weicheren Entkopplungsmembran 18 aus der Arbeitskammer 13 durch den Tilgerkanal 24 in die Tilgerkammer 19 strömen und dort eine Volumenänderung erzeugen. Die dynamische Steifigkeit des Lagers nimmt so ab, da das im Tilgerkanal 24 schwingende Fluid die Anregung des Motors unterstützt. Diese Schaltstellung wird im Leerlaufbetrieb eingenommen.

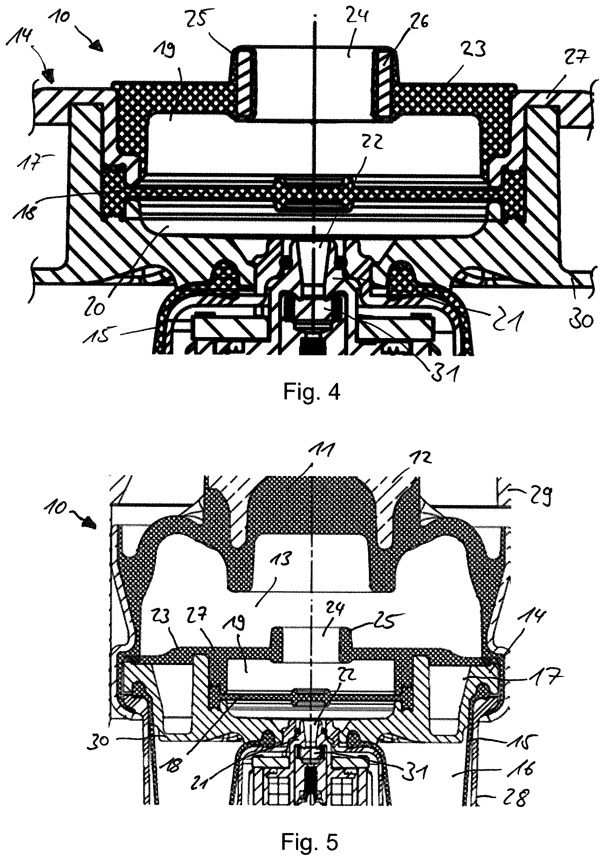

Fig. 4 zeigt eine vergrößerte Ansicht der Tilgerscheibe 23 eines anderen Ausführungsbeispiels. Ein Verstärkungselement 26, insbesondere ein Armierungsring, ist vorliegend in die Wandung 25 der Tilgerscheibe 23 einvulkanisiert. Das Verstärkungselement 26 schützt die Wandung 25 vor Verformungen und kann als Tilgermasse dienen. Das Ausführungsbeispiel aus Fig. 4 stimmt im Übrigen mit den zuvor beschriebenen Ausführungsbeispielen überein, sodass von einer weiteren Detailbeschreibung abgesehen wird.

In Fig. 5 ist eine Schnittansicht eines weiteren Ausführungsbeispiels dargestellt, wobei die Tilgerscheibe 23 aus einem thermoplastischen Elastomer hergestellt ist und mit der oberen Düsenplatte 27 der Zwischenplatte einstückig ausgebildet ist. Auch diese Ausführungsform unterscheidet sich ansonsten nicht von den zuvor beschriebenen Ausführungsformen und wird daher nicht weiter im Detail beschrieben.

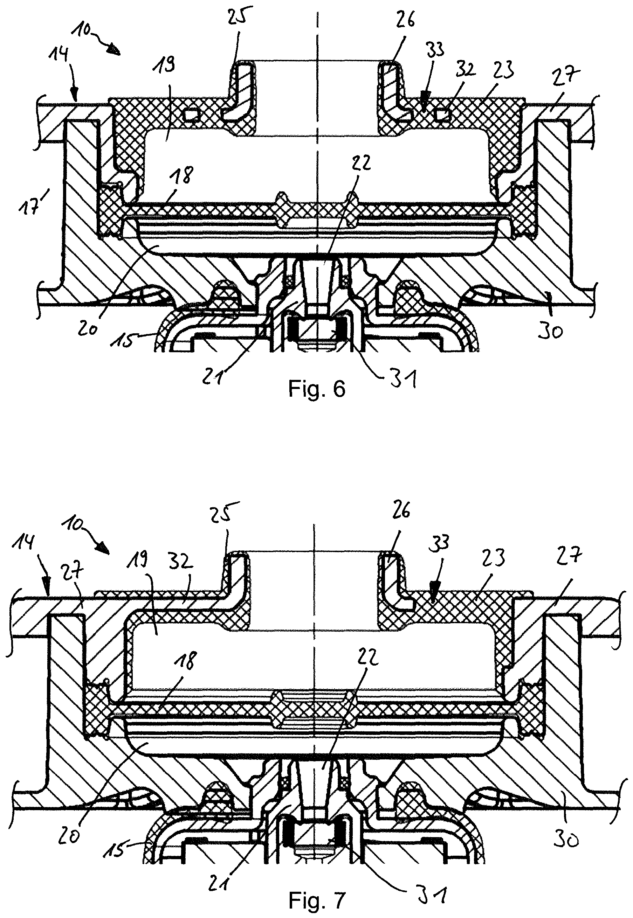

Wie beispielhaft in Fig. 6 und 7 dargestellt, kann die Tilgerscheibe 23 ein Stützelement 32 aufweisen, wodurch die Steifigkeit der Tilgerscheibe 23 unterstützt wird. Das Stützelement 32 kann beispielsweise aus Kunststoff, Aluminium oder aus Stahlblech hergestellt sein. Im vorliegenden Beispiel weist das Stützelement 32 Aussparungen 33 auf und ist einteilig mit dem Verstärkungselement 26 ausgebildet. Alternativ oder zusätzlich kann das Stützelement 32, wie in Fig. 7 zu sehen ist, einteilig mit der oberen Düsenplatte 27 ausgebildet sein. Durch diese Maßnahmen kann die Steifigkeit der Tilgerscheibe 23 gezielt verbessert werden.

Weitere Maßnahmen zum Erhöhen der Steifigkeit der Tilgerscheibe 23 sind denkbar. Diese können beispielsweise derart umgesetzt werden, dass die Dicke der Tilgerscheibe 23 von außen nach innen zunimmt. Zusätzlich oder alternativ könnten bei einer aus einem thermoplastischen Elastomer hergestellten Tilgerscheibe 23 Versteifungsrippen angebracht werden.

Die Aussparungen 33 können beispielweise einem Muster folgend an dem Stützelement 32 angeordnet sein und unterschiedliche Formen aufweisen. Zum Beispiel können die Aussparungen 33 als Bohrungen oder als eine Speichenanordnung ausgebildet sein.

Das Material der Tilgerscheibe 23 kann das Stützelement 32 umgeben. Das Material der Tilgerscheibe 23 kann beispielsweise derart anvulkanisiert sein, dass dieses das Verstärkungselement 26 und das Stützelement 32 vollumfänglich umschließt. Weiter kann das Material der Tilgerscheibe 23 die Aussparungen 33 des Stützelements 32 ausfüllen, wodurch eine elastische Trennung von Tilgerkammer 19 und Arbeitskammer 13 sowie eine positive Beeinflussung des Hochfrequenzverhaltens erzielt wird.

### Bezugszeichenliste

- 10: Hydrolager
- 11: Tragfeder
- 12: Lagerkern
- 13: Arbeitskammer
- 14: Zwischenplatte
- 15: Ausgleichsmembran
- 16: Ausgleichskammer
- 17: Dämpfungskanal
- 18: Entkopplungsmembran
- 19: Tilgerkammer
- 20: Luftkammer
- 21: Schalteinheit
- 22: Belüftungsbohrung
- 23: Tilgerscheibe
- 24: Tilgerkanal
- 25: Wandung
- 26: Verstärkungselement
- 27: obere Düsenplatte
- 28: Deckel
- 29: Gehäuse
- 30: untere Düsenplatte
- 31: Dichtelement
- 32: Stützelement
- 33: Aussparung

## Patentansprüche

1. Hydrolager (10), insbesondere zur Lagerung eines Kraftfahrzeugmotors an einer Fahrzeugkarosserie, mit einer Tragfeder (11), die einen Lagerkern (12) abstützt und eine Arbeitskammer (13) umschließt, einer Ausgleichskammer (16), die von der Arbeitskammer (13) durch eine Zwischenplatte (14) getrennt und von einer Ausgleichsmembran (15) begrenzt ist, wobei die Ausgleichskammer (16) und die Arbeitskammer (13) mit einer Flüssigkeit gefüllt und über einen in der Zwischenplatte (14) angeordneten Dämpfungskanal (17) flüssigkeitsleitend miteinander verbunden sind, wobei die Zwischenplatte (14) eine Entkopplungsmembran (18) aufweist, die eine Tilgerkammer (19) von einer Luftkammer (20) trennt, wobei die Luftkammer (20) eine Belüftungsbohrung (22) aufweist, wobei die Zwischenplatte (14) eine Tilgerscheibe (23) mit einem Tilgerkanal (24) aufweist, und wobei der Tilgerkanal (24) die Tilgerkammer (19) mit der Arbeitskammer (13) verbindet, **dadurch gekennzeichnet, dass** die Tilgerscheibe (23) aus einem elastischen Werkstoff hergestellt ist, und im Betrieb schwingt.

2. Hydrolager (10) nach Anspruch 1, **dadurch gekennzeichnet, dass** die Tilgerscheibe (23) eine axial abragende Wandung (25) aufweist, die den Tilgerkanal (24) begrenzt.

3. Hydrolager (10) nach Anspruch 1 oder 2, **dadurch gekennzeichnet, dass** die Tilgerscheibe (23) aus einem thermoplastischen Elastomer hergestellt ist.

4. Hydrolager (10) nach Anspruch 2, **dadurch gekennzeichnet, dass** ein Verstärkungselement (26), insbesondere ein Armierungsring, in die Wandung (25) der Tilgerscheibe (23) einvulkanisiert ist.

5. Hydrolager (10) nach einem der vorstehenden Ansprüche, **dadurch gekennzeichnet, dass** die Zwischenplatte (14) eine obere Düsenplatte (27) aufweist, die mit der Tilgerscheibe (23) einstückig ausgebildet ist.

6. Hydrolager (10) nach einem der vorstehenden Ansprüche, **dadurch gekennzeichnet, dass** die Tilgerscheibe (23) ein Stützelement (32) aufweist.

7. Hydrolager (10) nach Anspruch 6, **dadurch gekennzeichnet, dass** das Stützelement (32) einteilig mit dem Verstärkungselement (26) ausgebildet ist.

8. Hydrolager (10) nach Anspruch 6 oder 7, **dadurch gekennzeichnet, dass** das Material der Tilgerscheibe (23) das Stützelement (32) umgibt.

9. Hydrolager (10) nach einem der Ansprüche 5 und 6 bis 8, **dadurch gekennzeichnet, dass** das Stützelement (32) einteilig mit der oberen Düsenplatte (27) ausgebildet ist.

10. Hydrolager (10) nach einem der Ansprüche 6 bis 9, **dadurch gekennzeichnet, dass** das Stützelement (32) mindestens eine Aussparung (33) aufweist.

11. Hydrolager (10) nach Anspruch 10, **dadurch gekennzeichnet, dass** die mindestens eine Aussparung (33) von dem Material der Tilgerscheibe (23) ausgefüllt ist.

12. Hydrolager (10) nach Anspruch 5, **dadurch gekennzeichnet, dass** die obere Düsenplatte (27) aus einem thermoplastischen Elastomer hergestellt ist.

13. Hydrolager (10) nach einem der vorstehenden Ansprüche, **dadurch gekennzeichnet, dass** die Belüftungsbohrung (22) durch eine Schalteinheit (21), insbesondere einen elektrischen Aktor, schaltbar ist.

## Claims

1. Hydraulic mount (10), in particular for supporting a vehicle engine on a vehicle body, with a suspension spring (11) supporting a mount core (12) and enclosing a working chamber (13), a compensation chamber (16) separated by an intermediate plate (14) from the working chamber (13) and bounded by a compensation membrane (15), wherein the compensation chamber (16) and the working chamber (13) are filled with a liquid and are connected to one another in a fluid-conducting manner via a damping channel (17) arranged in the intermediate plate (14), wherein the intermediate plate (14) has a decoupling membrane (18) separating an absorber chamber (19) from an air chamber (20), wherein the air chamber (20) has a ventilation hole (22), wherein the intermediate plate (14) has an absorber disc (23) with an absorber channel (24), and wherein the absorber channel (24) connects the absorber chamber (19) with the working chamber (13), **characterised in that** the absorber disc (23) is made of an elastic material and swings during operation.

2. Hydraulic mount (10) according to claim 1, **characterised in that** the absorber disc (23) has an axially projecting wall (25) bounding the absorber channel (24).

3. Hydraulic mount (10) according to claim 1 or 2, **characterised in that** the absorber disc (23) is made of a thermoplastic elastomer.

4. Hydraulic mount (10) according to claim 2, **characterised in that** a reinforcing element (26), in particular a reinforcing ring, is vulcanized into the wall (25) of the absorber disc (23).

5. Hydraulic mount (10) according to any one of the preceding claims, **characterised in that** the intermediate plate (14) has an upper nozzle plate (27), which is formed integrally with the absorber disc (23).

6. Hydraulic mount (10) according to any one of the preceding claims, **characterised in that** the absorber disc (23) has a supporting element (32).

7. Hydraulic mount (10) according to claim 6, **characterised in that** the supporting element (32) is formed integrally with the reinforcing element (26).

8. Hydraulic mount (10) according to claim 6 or 7, **characterised in that** the material of the absorber disc (23) surrounds the supporting element (32).

9. Hydraulic mount (10) according to any one of claims 5 and 6 to 8, **characterised in that** the supporting element (32) is formed integrally with the upper nozzle plate (27).

10. Hydraulic mount (10) according to any one of claims 6 to 9, **characterised in that** the supporting element (32) has at least one recess (33).

11. Hydraulic mount (10) according to claim 10, **characterised in that** the at least one recess (33) is filled with the material of the absorber disc (23)

12. Hydraulic mount (10) according to claim 5, **characterised in that** the upper nozzle plate (27) is made of a thermoplastic elastomer.

13. Hydraulic mount (10) according to any one of the preceding claims, **characterised in that** the ventilation hole (22) is switchable by a switching unit (21), in particular by an electrical actuator.

## Revendications

1. Support hydraulique (10), destiné en particulier à monter un moteur de véhicule automobile sur une carrosserie de véhicule, comportant un ressort porteur (11) qui supporte un noyau de support (12) et qui entoure une chambre de travail (13), une chambre de compensation (16) qui est séparée de la chambre de travail (13) par une plaque intermédiaire (14) et qui est délimitée par une membrane de compensation (15),
dans lequel
la chambre de compensation (16) et la chambre de travail (13) sont remplies d'un liquide et reliées l'une à l'autre par un canal d'atténuation (17) réalisé dans la plaque intermédiaire (14), de manière à permettre la circulation du liquide,
la plaque intermédiaire (14) comprend une membrane de découplage (18) qui sépare une chambre d'amortissement (19) d'une chambre à air (20),
la chambre à air (20) présente un perçage de ventilation (22),
la plaque intermédiaire (14) comprend un disque d'amortissement (23) pourvu d'un canal d'amortissement (24),
et le canal d'amortissement (24) relie la chambre d'amortissement (19) à la chambre de travail (13),
**caractérisé en ce que**
le disque d'amortissement (23) est réalisé en un matériau élastique et oscille pendant le fonctionnement.

2. Support hydraulique (10) selon la revendication 1,
**caractérisé en ce que**
le disque d'amortissement (23) comprend une paroi (25) axialement en saillie qui délimite le canal d'amortissement (24).

3. Support hydraulique (10) selon la revendication 1 ou 2,
**caractérisé en ce que**
le disque d'amortissement (23) est réalisé en un élastomère thermoplastique.

4. Support hydraulique (10) selon la revendication 2,
**caractérisé en ce que**
un élément de renforcement (26), en particulier un anneau d'armature, est intégré par vulcanisation dans la paroi (25) du disque d'amortissement (23).

5. Support hydraulique (10) selon l'une des revendications précédentes,
**caractérisé en ce que**
la plaque intermédiaire (14) comprend une plaque à buse (27) supérieure qui est réalisée d'un seul tenant avec le disque d'amortissement (23).

6. Support hydraulique (10) selon l'une des revendications précédentes,
**caractérisé en ce que**
le disque d'amortissement (23) comprend un élément de soutien (32).

7. Support hydraulique (10) selon la revendication 6,
**caractérisé en ce que**
l'élément de soutien (32) est réalisé d'un seul tenant avec l'élément de renforcement (26).

8. Support hydraulique (10) selon la revendication 6 ou 7,
**caractérisé en ce que**
le matériau du disque d'amortissement (23) entoure l'élément de soutien (32).

9. Support hydraulique (10) selon l'une des revendications 5 et 6 à 8,
**caractérisé en ce que**
l'élément de soutien (32) est réalisé d'un seul tenant avec la plaque à buse (27) supérieure.

10. Support hydraulique (10) selon l'une des revendications 6 à 9,
**caractérisé en ce que**
l'élément de soutien (32) présente au moins une échancrure (33).

11. Support hydraulique (10) selon la revendication 10,
**caractérisé en ce que**
ladite au moins une échancrure (33) est remplie par le matériau du disque d'amortissement (23).

12. Support hydraulique (10) selon la revendication 5,
**caractérisé en ce que**
la plaque à buse (27) supérieure est réalisée en un élastomère thermoplastique.

13. Support hydraulique (10) selon l'une des revendications précédentes,
**caractérisé en ce que**
le perçage de ventilation (22) peut être commuté par un ensemble de commutation (21), en particulier par un actionneur électrique.
